# EUROPEAN PATENT APPLICATION

(11) **EP 1 357 722 A1**
(43) Date of publication of application: **29.10.2003**
(21) Application number: 03008904.9
(22) Date of filing: 16.04.2003
(51) Int. Cl.: H04L 29/06

(54) **Method for controlling network access for fragments**

(30) Priority: 23.04.2002 CN 02117284
(71) Applicant: Huawei Technologies Co., Ltd., Shenzhen City, Guangdong Province 518057 (CN)
(72) Inventor: Yang, Wei, Huawei Service Cr. Building, Shenzhen City, Guangdong Province 518057 (CN)
(74) Representative: Reyier, Ann-Mari

(57) **Abstract**

The present invention relates to a method of network access control method for fragments in network access control technology. It comprises: first, record the property information and fragment identification of the first fragment according to requirements; second, the subsequent fragment query the property information of the first fragment that has the same fragment identification as the subsequent fragment according to the fragment identification; third, determine the network accessibility of the subsequent fragment according to the queried result. It can be concluded from said technical scheme that the present invention overcomes the disadvantage in conventional network access technology that fragments network access cannot be effectively controlled, and realizes that the fragments network access control can be as convenient as the common message or first fragment network access control, and in this way better guarantees the network security.

## Description

### Field Of The Invention

The present invention relates to network access control technology, particularly to a method for controlling network access for fragments.

### Background Of The Invention

The network access control technology is a technology controlling the access targets of message according to their property information, usually used to separate Intranet from public network (such as Internet). The network access control technology can set an access control standard for two communicating networks. In the network based upon Internet Protocol (IP), usually the access control between networks is realized according to the source address and destination address based on IP message, applied protocol types and the port number of the Transfer Control Protocol/User Datagram Protocol (TCP/UDP) carried by the IP message. At present it is popular to configure a group of Access Control List (ACL) that may match with the message according to the requirements for network access control. Each ACL contains multiple of rules and each rule contains the property information of allowed or forbidden message. For instance, allow the network 123.1.0.0 to use port No. 21 to access the host 150.0.0.1 with the File Transfer Protocol (FTP); allow the user with IP address 202.103.1.18 and 202.103.1.14 to telnet to the host 150.0.0.2 by using port No. 23; allow e-mail with any address to use port No. 25 to enter the host 150.0.0.3, etc. The capability of describing the property information of the message determines the capability of network access control processing message. For normal IP message, the conventional capability of describing property information of message can meet the requirements. However, for bigger IP messages, as they contain fragmentation property and description of higher-layer information carried by an IP message is only contained in the first fragment of the IP message, such as the information of Transfer Control Protocol (TCP), certain description of property information cannot realize network access control for the fragments, such as the information out of the third layer of port description, because there is no corresponding information matching with it in the fragments.

At present there are two main kinds of access control for fragments. One is to adopt the method of "allow all" or "forbid all" for the entire fragments. This method has great hidden trouble in security and application limitation. When it allows all, it is easy for hackers to construct fragments to perform flow attack; when it forbids all, all the fragments including valid ones will be rejected and discarded, which is not allowed in practical application. The other method of network access control adopts ACL, although it also contains the information in and out of three layers such as the source destination address information, protocol type and information out of the third layer. Therein, the information out of the third layer includes the port number of Transfer Control Protocol/User Datagram Protocol (TCP/UDP), the type and code of Internet Control Messages Protocol (ICMP). But for fragments, only the information of three layers is matched in rule to determine network accessibility of the fragments and the information out of the third layer carried by the fragments will be neglected. This method cannot guarantee the effectiveness in the network access control for the fragments. It is still possible that hackers construct fragments to perform flow attack. Therefore, the network security cannot be better guaranteed.

### Summary Of The Invention

Object of the present invention is to provide a method of network access control for fragments to realize effective control over the network access for fragments to increase the network security.

The object of the present invention is realized as the following: the method for controlling network access for fragments comprises:
(1) recording the property information and fragment identification of the first fragment according to requirements;
(2) the subsequent fragment querying the property information of the first fragment which has the same fragment identification as the subsequent fragment according to the fragment identification;
(3) determining the network accessibility of the subsequent fragment according to the queried result.

Said step (1) comprises:
(21) determining whether the message is the first fragment, if yes, processing to step (22), otherwise step (23);
(22) recording the property information and fragment identification of the first fragment according to requirements;
(23) ending the determination.

Said property information is the network accessibility information of the first fragment.

Said message is Internet Protocol (IP) message. Whether the message is the first fragment is determined according to the fragment identification and fragment offset of the message.

Said property information is the information out of the third layer in the first fragment.

Said recording the property information and fragment identification of the first fragment according to requirements, comprising:
(61) matching the information in and out of the third layer of the first fragment with corresponding access control rule, and determining whether the first fragment can perform corresponding access, if yes, processing to step (62), otherwise step (63);
(62) recording the fragment identification and the information out of the third layer of the first fragment;
(63)ending this operation.

Said information of the third layer comprises: network address information, protocol type information; said information out of the third layer comprises: the port number of the Transfer Control Protocol/User Datagram Protocol (TCP/UDP), the type and code of the Internet Control Messages Protocol (ICMP).

The information out of the third layer and the fragment identification recorded in said step (62) are stored with a hash tree data structure.

Said fact that the information out of the third layer and the fragment identification are stored with a hash tree data structure, comprises:
(91) generating the information out of the third layer and the fragment identification which are required to be recorded;
(92) determining whether new items are allowed to be added to the state information table constructed with a hash tree data structure, if yes, processing to step (93), otherwise step (94);
(93) recording the information out of the third layer and the fragment identification into the state information table;
(94) ending this operation.

Seen from said technical scheme, the present invention can record the information out of the third layer or network accessibility and fragment identification of the first fragment, and then the fragments can determine the network accessibility according to the recorded property information. The present invention overcomes the disadvantage existing in the current network access control technology in which network access for fragments cannot be effectively controlled, and it is realized that network access control for fragments can be determined by the accessibility of the information in and out of the third layer recorded in ACL as network access control for common message or the first fragment, and in this way network security can be better guaranteed.

### Brief Description Of The Drawings

Fig. 1 is the structural diagram of IP message containing fragments.
Fig.2 is the flowchart of the method of network access control for fragments.
Fig.3 is the structural diagram of the state information table.

### Detailed Description Of The Embodiment

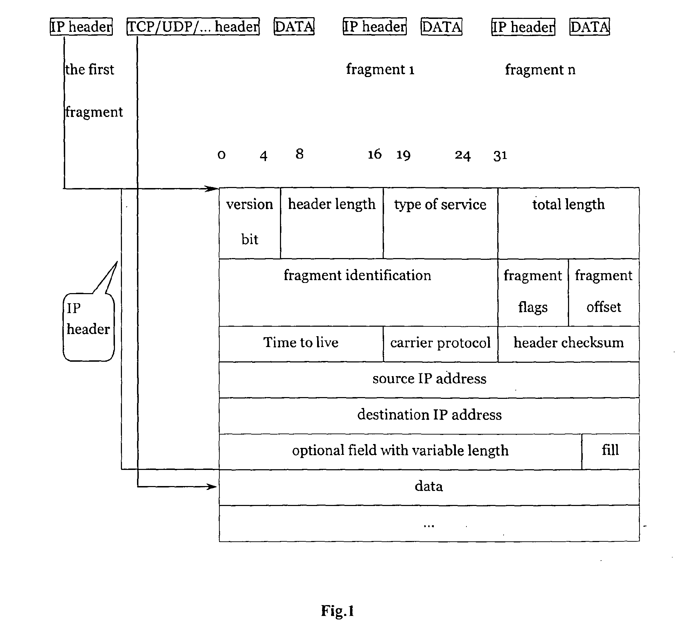

The effective control over network access is usually realized by describing more property information of the message in the ACL. The current ACL designed for IP message contains information in and out of the third layer, specifically including the source destination address information, protocol type and information out of the third layer. The information out of the third layer therein includes the port number of Transfer Control Protocol/User Datagram Protocol (TCP/UDP), the type and code of Internet Control Messages Protocol (ICMP). Said ACL can realize very well the network access control for IP message without fragments. But for some bigger IP message, they usually contain fragments during transmission process, as is shown in Fig.1, the fragments only carry information in the third layer of the message, not the information out of the third layer of the message. Therefore, network access control for fragments cannot be realized with the information out of the third layer in ACL. The technical scheme of the present invention may make full use of the information out of the third layer in ACL to realize network access control for fragments.

The present invention is designed for the fact that the ACL applied in network access control contains the information out of the third layer. In the present invention, the information out of the third layer of the first fragment is recorded to meet the requirements for ACL rule matching with corresponding information for fragments. The present invention can be realized as the following: determine whether the fragment is the first fragment; if yes, record the information out of the third layer; if it is a subsequent fragment, search the recorded property information with the fragment identification as the keyword for searching. If such information is found, all information out of the third layer will be obtained and network access control for fragments can be realized by performing matching operation for common message.

In order to increase efficiency and security, since matching of the subsequent fragment is decided by that of the first fragment, that is, for the subsequent fragment, the matching rule out of the third layer contained in ACL is effective to the subsequent fragment and the property information is necessary to be recorded only when the first fragment is allowed; therefore, when the first fragment is allowed by ACL, the information out of the third layer of this message is recorded. When the ACL rule item forbids the first fragment, no information is recorded. Additionally, the network accessibility of the subsequent fragment is consistent with that of the first fragment. The network accessibility of the fragments can also be determined only by recording the network accessibility information of the first fragment to further increase efficiency of network access control for fragments.

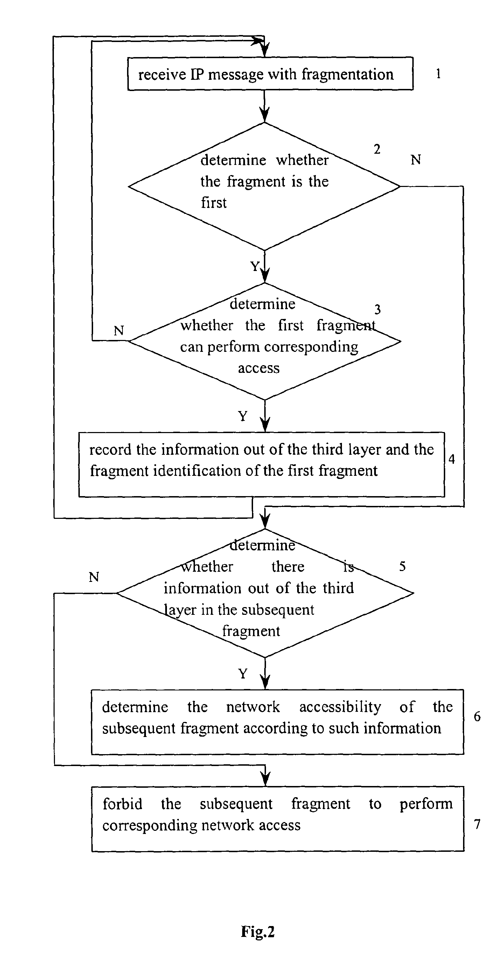

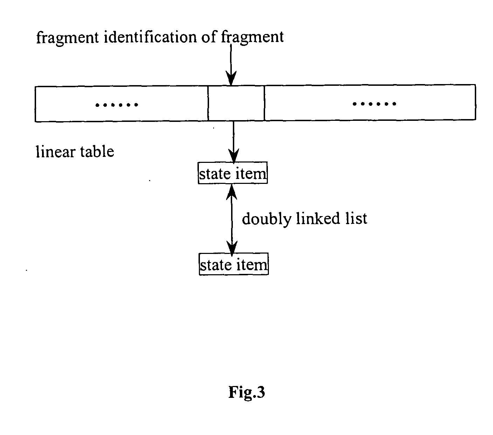

The detailed embodiment of the method of network access control for fragments of the present invention is described as the following, referring to Fig.2:
step 1: receive the IP message with fragmentation;
step 2: determine whether it is the first fragment according to the fragment identification and fragment offset of the message. If yes, process to step 3, otherwise step 5;
step 3: match the information in and out of the third layer of the first fragment with the corresponding access control rule to determine whether the first fragment can perform corresponding access. If yes, process to step 4, otherwise not record and process to step 1;
step 4: record the information out of the third layer and the fragment identification of the first fragment and process to step 1;
   the recorded information out of the third layer and fragment identification are stored with a hash tree data structure. First, organize and construct a state information table with the hash tree data structure, referring to Fig.3; each item in the state information table records the information out of the third layer of the first fragment or the filtered (allow or forbid) information by ACL. The linear table stores the hash number of the fragment identification of the fragments after hash operation, and items with the same hash number form a doubly linked list;
   then, when generate the information out of the third layer and the fragment identification that are required to be recorded, determine whether new entries are allowed to be added to the state information table constructed with a hash tree data structure. If yes, the fragment identification and the information out of the third layer of the first fragment are recorded in the state information table, otherwise the information out of the third layer and the fragment identification cannot be recorded;
   the state information table is protected considering extra risks, which including: limit the maximum allowed total record item number; limit the number of record items in each hash branch when the hash is unevenly distributed; provide time ageing function to the record items, i.e., under unusual circumstance, when the record items cannot be normally deleted, they will be deleted by over time limitation to increase reliability of network access control for fragments;
step 5: if the message is the subsequent fragment, query whether there exists the information out of the third layer corresponding to fragment identification according to the fragment identification of the subsequent fragment. If yes, process to step 6, otherwise step 7;
step 6: determine network accessibility of the subsequent fragment according to the recorded information out of the third layer about the subsequent fragment and the information in the third layer carried by the subsequent fragment;
   the information in the third layer comprises the network address information, the protocol type information. The information out of the third layer comprises the port number of the Transfer Control Protocol/User Datagram Protocol (TCP/UDP), the type and code of the Internet Control Messages Protocol (ICMP);
   determination of the network accessibility of the subsequent fragment is the same as that of the network accessibility of the common message, and match the information in and out of the third layer about the subsequent fragment with corresponding ACL rule and determine the network accessibility according to the matching result;
step 7: forbid the subsequent fragment to perform corresponding access.

In said detailed embodiment, step 3 can be omitted, i.e., after determining that the fragments is the first fragment, directly record the information out of the third layer and the fragment identification of the first fragment and the subsequent fragment corresponding to the first fragment can determine the network accessibility according to the recorded corresponding information out of the third layer and the fragment identification.

According to the method of network access control for fragments of the present invention, only the accessibility information and fragment identification of the first fragment can also be recorded after determining the accessibility of the first fragment. The subsequent fragment can query the accessibility information of the corresponding first fragment according to the fragment identification to determine the network accessibility of the subsequent fragment. The network accessibility of the subsequent fragment is the same as the queried accessibility of the corresponding first fragment. The scheme only records the network accessibility information and the fragment identification of the first fragment, therefore amount of recorded information is reduced, and at the same time another rule matching for the subsequent fragment is unnecessary, therefore, it makes the process of network access control for fragments more convenient and efficient.

## Claims

1. A method for controlling network access for fragments, comprising:
(1) recording the property information and fragment identification of the first fragment according to requirements;
(2) the subsequent fragment querying the property information of the first fragment which has the same fragment identification as the subsequent fragment according to the fragment identification;
(3) determining the network accessibility of the subsequent fragment according to the queried result.

2. A method for controlling network access for fragments of claim 1, wherein said step (1) comprises:
(21) determining whether the message is the first fragment, if yes, processing to step (22), otherwise step (23);
(22) recording the property information and fragment identification of the first fragment according to requirements;
(23) ending the determination.

3. A method for controlling network access for fragments of claim 1, wherein said property information is the network accessibility information of the first fragment.

4. A method for controlling network access for fragments of claim 2, wherein said message is Internet Protocol (IP) message, whether the message is the first fragment is determined according to the fragment identification and fragment offset of the message.

5. A method for controlling network access for fragments of claim 4, wherein said property information is the information out of the third layer in the first fragment.

6. A method for controlling network access for fragments of claim 5, wherein said recording the property information and fragment identification of the first fragment according to requirements comprises:
(61) matching the information in and out of the third layer of the first fragment with corresponding access control rule, and determining whether the first fragment can perform corresponding access, if yes, processing to step (62), otherwise step (63);
(62) recording the fragment identification and the information out of the third layer of the first fragment;
(63) ending this operation.

7. A method for controlling network access for fragments of claim 6, wherein said information of the third layer comprises: network address information, protocol type information; said information out of the third layer comprises: the port number of the Transfer Control Protocol/User Datagram Protocol (TCP/UDP), the type and code of the Internet Control Messages Protocol (ICMP).

8. A method for controlling network access for fragments of claim 6, wherein the information out of the third layer and the fragment identification recorded in said step (62) are stored with a hash tree data structure.

9. A method for controlling network access for fragments of claim 8, wherein said fact that the information out of the third layer and the fragment identification are stored with a hash tree data structure comprises:
(91) generating the information out of the third layer and the fragment identification which are required to be recorded;
(92) determining whether new items are allowed to be added to the state information table constructed with a hash tree data structure, if yes, processing to step (93), otherwise step (94);
(93) recording the information out of the third layer and the fragment identification into the state information table;
(94) ending this operation.
